# EUROPÄISCHE PATENTSCHRIFT

(11) **EP 0 923 973 B1**
(45) Veröffentlichungstag und Bekanntmachung des Hinweises auf die Patenterteilung: **20.03.2002**
(21) Anmeldenummer: 98123901.5
(22) Anmeldetag: 16.12.1998
(51) Int. Cl.: B01D 29/33, B01D 29/66, B01D 35/143, E03B 7/07

(54) **Verfahren und Vorrichtung zum Betrieb einer rückspülbaren Filtereinrichtung**
Process and device for operating a back flushable filtration device
Procédé et dispositif pour faire fonctionner un dispositif de filtration à nettoyage par contre-courant

(30) Priorität: 18.12.1997 DE 19756471
(43) Veröffentlichungstag der Anmeldung: 23.06.1999
(73) Patentinhaber: HONEYWELL AG, 63067 Offenbach am Main (DE)
(72) Erfinder: Bostel-d'Argent, Rainer Dr., 74821 Mosbach (DE); Baumeister, Harald Dipl.-Ing., 69115 Heidelberg (DE)
(74) Vertreter: Fritz, Edmund Lothar, Dipl.-Chem.

(56) Entgegenhaltungen:
- EP-A- 0 688 593
- WO-A-96/36416
- DE-A- 19 622 163

## Beschreibung

Die vorliegende Erfindung bezieht sich auf eine rückspülbare Filtereinrichtung gemäß dem Oberbegriff des Patentanspruches 1.

Es ist bekannt, bei rückspülbaren Filtereinrichtungen die Rückspülung durch Öffnen eines Ablaßventiles einzuleiten. Diesbezüglich sei beispielsweise auf die EP 0 723 797 A1 verwiesen. Das Öffnen des Ablaßventiles kann nicht nur durch Hand sondern auch automatisch durch eine Rückspülautomatik erfolgen, wobei die Rückspülautomatik gemäß einem eingestellten Zeitprogramm oder bei einem vorbestimmten Differenzdruck zwischen Ein- und Ausgang des Filters betätigt wird. Im letzteren Fall ermittelt ein Differenzdruckschalter die Differenz der Drücke vor und hinter dem Filtersieb und gibt beim Überschreiten eines vorgebbaren Differenzdruckes ein entsprechendes Signal an die Rückspülautomatik für die Betätigung des Ablaßventiles aus. Hinsichtlich weiteren Standes der Technik wird auf WO-A-96/36416 verwiesen.

Nachteilig bei dieser Lösung ist die Tatsache, daß der Differenzdruck nur bei Wasserentnahme entsteht und bei Einleitung der Rückspülung zu diesem Zeitpunkt der volle Wasserdruck für die Rückspülung nicht zur Verfügung steht.

Die vorliegende Erfindung vermeidet diesen Nachteil durch eine rückspülbare Filtereinrichtung gemäß den kennzeichnenden Merkmalen des Patentanspruches 1. Weitere vorteilhafte Ausgestaltungen sind den abhängigen Ansprüchen entnehmbar.

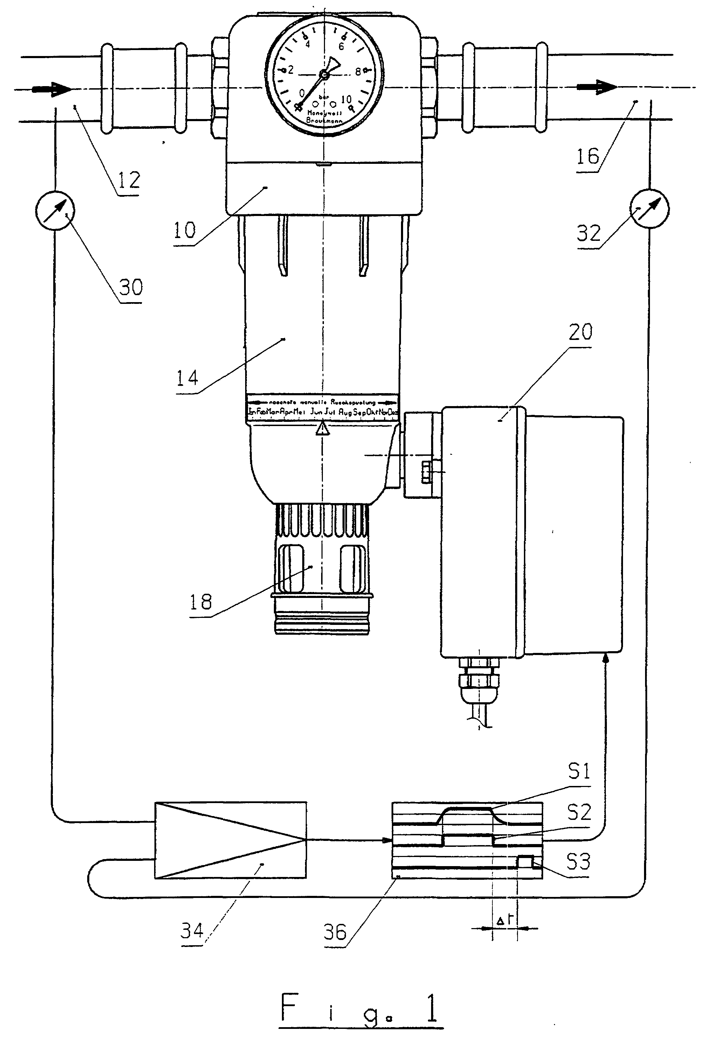

Anhand der einzigen Figur der beiliegenden Zeichnung sei im folgenden die Erfindung näher erläutert.

In dieser Figur enthält eine rückspülbare Filtereinrichtung 10, die im wesentlichen derjenigen in der EP 0 723 797 A1 entspricht und die unter der Typenbezeichnung F76S von der Anmelderin vertrieben wird, innerhalb einer Filtertasse 14 eine rückspülbare Filtereinrichtung. Die Rückspülung wird eingeleitet durch Betätigung eines nicht dargestellten Ablaßventiles über eine Rückspülautomatik 20, wobei im Falle der Rückspülung das verschmutzte Rückspülfluid über einen Trichter 18 nach unten abgeleitet wird. Die Rückspülautomatik 20 wird von der Anmelderin unter der Typenbezeichnung Z11S vertrieben.

Die am Eingang 12 und am Ausgang 16 der Filtereinrichtung 10 anstehenden Drücke können durch Manometer 30, 32 angezeigt werden und einem Differenzdruckschalter 34 zugeführt werden.. Ein solcher Differenzdruckschalter wird von der Anmelderin unter der Typenbezeichnung DDS 76 vertrieben. Der Wert des Differenzdruckes, bei dem die Auslösung des Differenzdruckschalters erfolgt, ist einstellbar. Normalerweise ist die Filtereinrichtung 10 auf der Oberseite mit zwei Anschlüssen versehen, an denen der Eingangsdruck und der Ausgangsdruck zugänglich sind, so daß der Differenzdruckschalter 34 auf der Filtereinrichtung 10 montiert werden kann.

Dem Differerzdruckschalter 34 ist erfindungsgemäß eine Logikschaltung 36 nachgeschaltet, die mit dem elektrisch gebildeten Differenzdrucksignal S 1 eine Impulsformung ausführt, um ein Rechteck-Impulssignal S2 zu bilden und beim Verschwinden dieses Impulssignales S2 zeitverzögert um die Zeit Δt ein Betätigungssignal S3 für die Rückspülautomatik 20 zu erzeugen.

## Patentansprüche

1. Rückspülbare Filtereinrichtung, insbesondere für eine Hauswasseranlage, mit einem im Normalbetrieb von außen nach innen und im Rückspülbetrieb von innen nach außen durchströmten Filter, wobei die Rückspülung durch Öffnen eines Ablaßventiles eingeleitet wird, wenn der Differenzdruck zwischen Ein- und Ausgang einen vorgebbaren Wert überschreitet, mit einer von einem Differenzdruckschalter (34) betätigten Rückspülautomatik (20) für das Ablaßventil, **gekennzeichnet durch** eine zwischen den Differenzdruckschalter (34) und die Rückspülautomatik (20) geschaltete Logikeinrichtung (36) für die Erzeugung eines Betätigungssignales für die Rückspülautomatik (20), welches Betätigungssignal eine Betätigung der Rückspülautomatik (20) bewirkt, nachdem der Differenzdruck einen vorgegebenen Schwellwert überschritten und wieder einen zweiten vorgebbaren Schwellwert unterschritten hat.

2. Vorrichtung nach Anspruch 1, **gekennzeichnet durch** ein Verzögerungsglied (Δt) im Wege des Betätigungssignales zwischen Logikeinrichtung (36) und Rückspülautomatik (20).

## Claims

1. Back-flushable filter device, in particular for a built-in water system, having a filter through which the flow passes from the outside to the inside during normal operation and from the inside to the outside during back-flushing operation, with the back-flushing being initiated by opening an outlet valve when the differential pressure between the input and output exceeds a value which can be predetermined, having a back-flushing automatic device (20), which is operated by a pressure-difference switch (34), for the outlet valve, **characterized by** a logic device (36), which is connected between the pressure-difference switch (34) and the back-flushing automatic device (20), for producing an operating signal for the back-flushing automatic device (20), which operating signal results in the back-flushing automatic device (20) being operated once the pressure difference exceeds a predetermined threshold value, and has once again fallen below a second threshold value, which can be predetermined.

2. Apparatus according to Claim 1, **characterized by** a delay element (Δt) in the path of the operating signal between the logic device (36) and the back-flushing automatic device (20).

## Revendications

1. Dispositif de filtre de rétrolavage, en particulier pour une installation d'eau domestique, comprenant un filtre parcouru par un courant en fonctionnement normal de l'extérieur vers l'intérieur et en fonctionnement en rétrolavage de l'intérieur vers l'extérieur, dans lequel le rétrolavage est amorcé par l'ouverture d'une vanne de vidange, lorsque la différence de pression entre l'entrée et la sortie dépasse une valeur prédéfinissable, avec un système automatique de rétrolavage (20) actionné par un interrupteur de pression différentielle (34) pour la vanne de vidange, **caractérisé par** un dispositif logique (36) monté entre l'interrupteur de pression différentielle (34) et le système automatique de rétrolavage (20), pour la production d'un signal d'actionnement pour le système automatique de rétrolavage (20), lequel signal d'actionnement provoque un actionnement du système automatique de rétrolavage (20) après que la pression différentielle a dépassé une valeur seuil prédéfinie et est redescendue en dessous d'une deuxième valeur seuil prédéfinissable.

2. Dispositif selon la revendication 1, **caractérisé par** un organe de retard (Δt) dans le trajet du signal d'actionnement entre le dispositif logique (36) et le système automatique de rétrolavage (20).
